**Europäisches Patentamt**

**European Patent Office**

**Office européen des brevets**

(19)

(11) Numéro de publication : **0 298 802 B1**

(12)

# FASCICULE DE BREVET EUROPEEN

(45) Date de publication du fascicule du brevet :
**08.04.92 Bulletin 92/15**

(51) Int. Cl.⁵ : **H01M 6/18**

(21) Numéro de dépôt : **88401495.2**

(22) Date de dépôt : **16.06.88**

(54) **Procédé de fabrication d'un sous-ensemble électrochimique comprenant une électrode et un électrolyte, et sous-ensemble ainsi réalisé.**

(30) Priorité : **18.06.87 FR 8708539**

(43) Date de publication de la demande :
**11.01.89 Bulletin 89/02**

(45) Mention de la délivrance du brevet :
**08.04.92 Bulletin 92/15**

(84) Etats contractants désignés :
**AT BE CH DE ES FR GB IT LI LU NL SE**

(56) Documents cités :
**EP-A- 0 078 505**
**EP-A- 0 145 231**
**FR-A- 2 593 328**
**GB-A- 2 148 586**
**GB-A- 2 149 197**
**US-A- 3 314 820**
**PATENT ABSTRACTS OF JAPAN, vol. 9, no. 248 (E-347)[1971], 4 octobre 1985; & JP-A-60 97 561 (HITACHI SEISAKUSHO K.K.) 31-05-1985**

(73) Titulaire : **SOCIETE NATIONALE ELF AQUITAINE (PRODUCTION)**
**Tour Elf, 2, Place de la Coupole, La Défense 6**
**F-92400 Courbevoie (FR)**
Titulaire : **HYDRO-QUEBEC**
**75, Boulevard René Levesque Ouest**
**Montréal Québec H2Z 1A4 (CA)**

(72) Inventeur : **Muller, Daniel**
**12, rue Frédéric Mistral**
**F-64000 Pau (FR)**
Inventeur : **Chabagno, Jean-Michel**
**9, rue de Suède**
**F-64000 Pau (FR)**
Inventeur : **Duval, Michel**
**4993 Jean Brillant**
**Montréal H3W 1T8 Quebec (CA)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 298 802 B1

## Description

La présente invention concerne un procédé de fabrication d'un sous-ensemble électrochimique comprenant une électrode positive et un électrolyte, elle concerne aussi le sous-ensemble ainsi réalisé. Ce sous-ensemble trouve une application particulière pour la réalisation de générateurs électrochimiques complets du type de ceux décrits dans le brevet européen n° 013199, ces générateurs comprenant essentiellement un électrolyte solide polymère constitué par un sel en solution dans un matériau macromoléculaire tel que par exemple dans un polyoxyde d'éthylène et/ou un de ses copolymères, et une électrode positive composite constituée par le produit d'agglomération en une masse composite d'un matériau à conduction ionique constitué par un sel en solution dans un composé macromoléculaire, d'un matériau électrochimiquement actif tel que par exemple un oxyde de vanadium ou le disulfure de titane et d'un matériau conducteur électronique tel que par exemple du noir de carbone.

Ces générateurs peuvent être assemblés de toute manière connue mais ils peuvent aussi être assemblés comme décrit dans la demande de brevet déposée ce même jour par les mêmes déposants et intitulée : Ensemble multicouche pour la réalisation de l'assemblage d'un générateur en couche mince, procédé d'élaboration de cet ensemble et de réalisation du générateur complet, et générateur ainsi réalisé.

Pour que de tels générateurs complets présentent de bonnes performances tant électrochimiques que mécaniques, il est important que dans les sous-ensembles bi-couches constitués par la couche d'électrolyte associée à la couche de l'électrode positive, lesdites couches possèdent une bonne adhérence entre elles et ne possèdent pas d'orientation préférentielle des chaînes du matériau macromoléculaire à l'interface électrolyte/électrode. En effet, une telle orientation préférentielle de ces chaînes pourrait entraîner des problèmes de délamination des couches, c'est-à-dire de décollage et de perte d'adhérence entre l'électrolyte et l'électrode, ce qui pourrait entraîner des phénomènes de surtension aux électrodes lors du fonctionnement du générateur et limiter les possibilités de cyclage des générateurs secondaires.

D'autre part, lors de la réalisation de tels sous-ensembles, il est nécessaire d'éviter que le sel qui est en solution soit dans l'électrolyte, soit dans l'électrode, et qui peut être identique dans chacune de ces couches ou différent, présente une concentration trop élevée dans une de ces couches. En effet, une telle variation de la concentration pourrait entraîner une mauvaise interpénétration des chaînes polymères ainsi qu'une précipitation de complexes riches en sel, cette précipitation ayant lieu dans l'ensemble pour lequel la concentration du sel est la plus élevée. Ces complexes, qui sont cristallins et mauvais conducteurs ioniques, entraînent une perte locale de l'élasticité du milieu et de son adhésivité.

Enfin, il est nécessaire que le sous-ensemble réalisé ait une bonne tenue à la chaleur et que par exemple une évolution de la température au cours d'un procédé d'assemblage ou au cours d'une phase finale de l'élaboration de ce sous-ensemble bi-couche ne dégrade pas ce dernier, ce qui pourrait se produire si on utilisait un solvant dont le pouvoir solvant augmente avec la température.

La citation GB-A-2148586 décrit un sous-ensemble électrochimique bicouche électrolyte/électrode comprenant, sous la forme de films minces, une couche d'une électrode composite constituée par le produit d'agglomération, en une masse composite, d'un matériau à conduction ionique, lui-même constitué par un sel en solution dans un composé macromoléculaire, d'un matériau électrochimiquement actif d'électrode et d'un matériau conducteur électronique et une couche d'électrolyte solide constituée par un sel en solution dans un matériau macromoléculaire à conduction ionique. Un tel sous-ensemble est préparé en formant tout d'abord une première couche d'électrode ou d'électrolyte par coulage d'une solution des composantes de l'une des couches d'électrode ou d'électrolyte, puis après séchage de cette première couche, en formant sur ladite couche, une deuxième couche par coulage d'une solution des composantes de l'autre couche d'électrode ou d'électrolyte dans un solvant ne dissolvant pas le matériau macromoléculaire de la première couche.

L'invention a pour but d'établir un procédé permettant la fabrication d'un sous-ensemble électrochimique, qui est tel que décrit ci-dessus et satisfait aux conditions énoncées précédemment, ledit procédé ne présentant pas, entre autres, les inconvénients du procédé de la citation mentionnée plus haut.

Pour cela, l'invention prévoit un procédé de fabrication d'un sous-ensemble électrochimique bi-couche électrolyte/électrode comprenant, sous la forme de films minces, une couche d'une électrode composite constituée par le produit d'agglomération, en une masse composite, d'un matériau à conduction ionique lui-même constitué par un sel en solution dans un composé macromoléculaire, d'un matériau électrochimiquement actif d'électrode et d'un matériau conducteur électronique et une couche d'électrolyte solide constituée par un sel en solution dans un matériau macromoléculaire à conduction ionique, ce procédé consistant :

. à déposer l'une desdites couches sur un support à partir d'une phase fluide renfermant les éléments constitutifs de cette couche,

. à effectuer une réticulation partielle de la couche ainsi déposée et, sur cette couche partiellement réticulée,

. à déposer l'autre couche à partir d'une phase fluide renfermant les éléments constitutifs de ladite autre couche, cette dernière phase fluide étant susceptible de dissoudre ou de gonfler le matériau macromoléculaire présent dans la couche déposée en premier sur le support, ladite réticulation partielle de la couche déposée en premier étant telle que la phase liquide de la couche déposée en second gonfle le matériau macromoléculaire de ladite couche partiellement réticulée.

Selon une première forme de mise en oeuvre du procédé, on dépose tout d'abord sur le support une couche de la phase fluide renfermant les éléments constitutifs de l'électrode composite positive, puis après réticulation partielle de ladite couche, on dépose sur celle-ci une couche de la phase fluide renfermant l'électrolyte solide, cette dernière phase fluide étant susceptible de dissoudre le matériau macromoléculaire de l'électrode composite positive en l'absence de réticulation.

Selon une autre forme de mise en oeuvre du procédé, on dépose tout d'abord sur le support une couche de la phase fluide renfermant l'électrolyte solide, puis après réticulation partielle de ladite couche, on dépose sur cette dernière une couche de la phase fluide renfermant les éléments constitutifs de l'électrode composite positive, cette dernière phase fluide étant susceptible de dissoudre le matériau macromoléculaire de l'électrolyte solide en l'absence de réticulation.

Lorsque le matériau macromoléculaire à conduction ionique, qui entre dans la composition de l'électrolyte solide et dans celle de l'électrode composite positive, est suffisamment fluide aux températures de travail, par exemple matériau macromoléculaire de faible masse moléculaire, pour former avec les autres éléments constitutifs de l'électrolyte solide ou de l'électrode composite positive un mélange fluide directement utilisable dans les techniques de revêtement d'un substrat, un tel mélange peut être utilisé pour le dépôt de la couche considérée.

Avantageusement, la phase fluide à partir de laquelle on forme la couche d'électrolyte solide ou la couche d'électrode composite positive consiste en une solution ou, si tous les produits ne sont pas solubles, en une dispersion des éléments constitutifs soit de l'électrolyte solide ou de l'electrode composite positive dans un solvant du matériau macromoléculaire à conduction ionique présent dans la couche à former et du sel en solution dans ledit matériau macromoléculaire, la formation de ladite couche se faisant par application de la solution ou suspension correspondante sur, selon le cas, le support ou l'autre couche, puis évaporation du solvant.

De préférence, on utilise le même solvant pour former les phases liquides servant à former respectivement la couche d'électrolyte solide et la couche d'électrode composite positive.

A titre de solvant, on peut avantageusement employer un composé organique vaporisable capable de dissoudre à la fois le ou les matériaux macromoléculaires à conduction ionique et le ou les sels en solution dans ledit ou lesdits matériaux macromoléculaires. De préférence, le solvant utilisé présente un point d'ébullition inférieur à 140°C.

Selon une forme de mise en oeuvre particulière, le dépôt de la seconde couche est suivi d'une étape de réticulation partielle de cette couche.

La réticulation partielle de la couche déposée sur le support et éventuellement de l'autre couche, peut être effectuée par toute méthode connue, par exemple réticulation par catalyse photochimique cationique, réticulation par irradiation par un flux d'électrons ou autre rayonnement énergétique, réticulation par réaction chimique créant des pontages tels que ponts uréthannes, esters, siloxanes, aluminoxanes. De préférence, on fait appel à une réticulation par voie thermique, c'est-à-dire par élévation de température, en présence d'un agent de réticulation, notamment d'un générateur chimique de radicaux libres, activable thermiquement, ledit agent de réticulation étant présent dans la phase fluide utilisée pour former la couche soumise à la réticulation. Une telle élévation de température peut être utilisée pour l'évaporation du solvant lorsque la phase fluide utilisée pour le dépôt de la couche d'électrolyte ou de la couche d'électrode composite positive en contient un. Les générateurs chimiques de radicaux libres utilisables pour ladite réticulation thermique peuvent être notamment des peroxydes comme le peroxyde de benzoyle, le peroxyde de lauroyle, le peroxyde de dicumyle ou encore des composés azobisnitriles comme l'azobisisobutyronitrile.

La réticulation partielle selon l'invention est une réticulation classique qui crée des pontages entre les chaînes moléculaires. Cet effet de réticulation dépend du nombre de sites réticulables et du nombre de radicaux libres ou de groupements responsables des pontages et donc de la durée de la réticulation, de la température ainsi que de la concentration en générateurs de radicaux libres ou en précurseurs de groupements assurant les pontages ou encore de l'intensité du rayonnement énergétique dans le cas d'une réticulation par irradiation. Pour chaque cas particulier, ces paramètres seront déterminés de façon à obtenir le degré désiré de réticulation partielle. En particulier, dans le cas de la couche déposée en premier sur le support, il faut veiller à ne pas obtenir une réticulation trop importante de ladite couche avant le surépandage de la deuxième couche. En effet, une réticulation trop dense créerait une mauvaise interpénétration du polymère de la deuxième couche, car le polymère de la première couche se trouverait sous forme d'un réseau compact. Une telle réticulation dense entraînerait donc une perte de souplesse et une perte d'adhésion des deux couches entre elles, ce qui pourrait pénaliser toute utilisation du sous-ensemble bi-couche dans une technique ultérieure de transfert.

D'autre part, si on utilisait une première couche qui ne soit pas réticulée pour déposer la deuxième couche, on obtiendrait une désorganisation moléculaire due à la dissolution des molécules du polymère de la première couche par les composants liquides ou fluides de la deuxième couche. Une telle absence de réticulation entraînerait aussi un fluage et ceci particulièrement à chaud, cet effet de fluage augmentant avec le temps. On pourrait craindre aussi un phénomène possible d'arrachage des couches. En plus, l'absence de réticulation entraînerait un domaine de déformation élastique moins grand, ce qui pourrait être très pénalisant pour les générateurs secondaires puisque lors d'un cyclage il n'y aurait plus d'effet de compensation des variations volumiques.

Le support utilisé pour déposer la première couche peut être constitué soit par un matériau métallique élaboré sous forme de films minces par exemple un matériau faiblement ductile tel que l'aluminium, mais il peut être aussi constitué par un matériau plastique, ce matériau plastique présentant soit une bonne adhérence vis-à-vis de l'électrode, soit une adhérence partielle, soit une très mauvaise adhérence. Le choix de la qualité de l'adhérence dépendra de la suite des opérations que l'on veut mener, et du fait que l'on veuille ou non séparer le sous-ensemble bi-couche électrode/électrolyte du support.

Lors de la mise en oeuvre du procédé selon l'invention, le fait de ne réticuler que partiellement la première couche et d'utiliser pour le dépôt de la deuxième couche une phase liquide qui soit aussi solvant de la première couche permet d'obtenir un gonflement au moins partiel du matériau macromoléculaire de la première couche sans désorganisation de celui-ci. On obtient donc une meilleure pénétration des chaînes de la deuxième couche et un ancrage de ces chaînes dans les chaînes du polymère de la première couche puisque les chaînes de la deuxième couche qui sont contenues dans la phase liquide les apportant et dans laquelle le matériau macromoléculaire de la première couche est aussi soluble, sont en contact quasiment intime avec les chaînes macromoléculaires du matériau de la première couche. A la fin de l'opération de formation de la deuxième couche sur la première, et notamment lors de l'évaporation du solvant, s'il est utilisé, on obtient à l'interface desdites couches un continuum consistant en une structure polymère interpénétrée.

Comme indiqué précédemment, une fois que la deuxième couche est déposée sur la première, on peut procéder à une deuxième réticulation partielle ou complète. A l'interface des deux couches, cette réticulation se fait alors sur des chaînes qui sont déjà interpénétrées et consiste en une co-réticulation, ce qui renforce le continuum physique unissant les deux couches, ledit continuum se traduisant par une délamination quasiment impossible des deux couches. Ce continuum physique auquel vient s'ajouter une continuité chimique liée à la nature chimique de chaînes macromoléculaires de chaque couche permet d'obtenir une orientation au hasard et un bon enchevêtrement des chaînes macromoléculaires, chose que l'on ne pourrait pas obtenir si l'on utilisait par exemple une méthode de pressage ou de co-laminage à chaud pour former le sous-ensemble bi-couche. Le procédé de surépendage selon l'invention permet d'obtenir des sous-ensembles bi-couches qui, lorsqu'ils sont utilisés pour la réalisation de l'assemblage de générateurs secondaires, permettent une augmentation notable du nombre de cycles, une diminution de l'épaisseur de l'électrolyte en particulier de l'épaisseur critique à laquelle apparaissent les phénomènes dendritiques lors des cycles de recharge et décharge. Ces sous-ensembles bi-couches obtenus selon l'invention permettent aussi une augmentation des capacités utilisable par rapport aux capacités installées ainsi qu'une augmentation des puissances disponibles. En outre, ces sous-ensembles présentent des propriétés mécaniques qui permettent d'envisager leurs transferts sur des films métalliques tels que le lithium et ceci sous forte pression, ce qui permet d'obtenir une bonne adhésion, sans qu'apparaissent des phénomènes de courts-circuits, cette propriété étant valable même pour de très faibles épaisseurs d'électrolyte.

L'invention concerne aussi un sous-ensemble électrochimique comprenant, sous la forme de films minces, une couche d'une électrode composite constituée par le produit d'agglomération en une masse composite d'un matériau à conduction ionique, constitué par un sel en solution dans un matériau macromoléculaire, d'un matériau électrochimique actif d'électrode et d'un matériau conducteur des électrons, et une couche d'électrolyte solide constituée par un sel en solution dans un matériau macromoléculaire, ce sous-ensemble présentant un continuum entre le matériau macromo-léculaire de l'électrode et celui de l'électrolyte à l'interface des couches d'électrode et d'électrolyte et se caractérisant en ce que ledit continuum se présente sous la forme de deux structures polymères interpénétrées, qui sont formées l'une par des chaînes du matériau macromoléculaire de l'électrode composite et l'autre par des chaînes du matériau macromoléculaire de l'électrolyte solide et sont telles que des chaînes de l'une des structures polymères interpénétrées soient co-réticulées à des chaînes de l'autre desdites structures.

L'invention sera mieux comprise à la lecture des exemples suivants, donnés à titre illustratif mais nullement limitatif.

Première série d'exemples :

On a réalisé un générateur électrochimique au lithium selon quatre méthodes différentes, à savoir une méthode selon l'invention et les autres méthodes selon l'art antérieur, ledit générateur ayant les caractéristiques suivantes :

a) Electrolyte : L'électrolyte est un électrolyte solide polymère ayant une épaisseur de 20 μm et constitué par une solution de perchlorate de lithium dans un copolymère d'oxyde d'éthylène et d'allyle glycidyle éther à 80 % en masse d'oxyde d'éthylène, le perchlorate étant présent à raison de 7 % en poids dans le copolymère. La masse moléculaire du copolymère est de l'ordre de 100 000 (masse moléculaire viscosimétrique).

b) Electrode positive : L'électrode positive est une électrode composite à base de disulfure de titane, de noir de carbone et d'un électrolyte polymère de même composition que ci-dessus. L'épaisseur de cette électrode est telle qu'elle permet d'obtenir un dépôt équivalent à 2 Coulombs par $cm^2$, soit 11,6 g par $m^2$ de disulfure de titane.

c) Electrode négative : L'électrode négative est constituée par un feuillard de lithium de 75 μm (microns) d'épaisseur.

Première méthode : préparation des éléments séparément (Exemple comparatif)

a) Préparation de l'électrolyte : Sur un film de polyéthylène ou de polypropylène, on étale en utilisant un gabarit une solution, dans l'acétonitrile, d'un mélange du copolymère et du perchlorate de lithium à raison de 7 g de perchlorate pour 100 g de copolymère. L'ensemble est ensuite séché sous air pulsé à 80°C pendant 5 à 10 minutes et on obtient un film transparent d'électrolyte solide de 20 μm (microns) d'épaisseur sur le film de polypropylène.

b) Réalisation de l'électrode positive : L'électrode positive est réalisée sur un film d'aluminium de 20 μm (microns) d'épaisseur par enduction au gabarit d'une suspension de disulfure de titane et de noir de carbone dans la solution d'électrolyte précédemment citée, de façon à obtenir après séchage une masse composite contenant environ 22 g par $m^2$ de disulfure de titane.

c) Réalisation du sous-ensemble bi-couche : A l'aide d'une presse ou d'un laminoir chauffant, on presse ensemble l'électrode positive et l'électrolyte à une température variant de 50 à 100°C sous une contrainte telle que l'épaisseur totale soit inférieure de 10 μm (microns) à la somme des épaisseurs des composants initiaux.

On obtient un ensemble appelé "demi-pile" suffisamment adhérent au collecteur de positive pour permettre le décollement du film de polypropylène ayant servi de support lors de l'élaboration de l'électrolyte. Lorsque ce film de polypropylène est arraché de l'électrolyte, on réalise dans une deuxième opération le pressage du feuillard de lithium sur le sous-ensemble électrode-électrolyte à des pressions et des températures du même ordre de grandeur que pour le transfert de l'électrolyte sur l'électrode. Une autre méthode pourrait consister à procéder d'abord au transfert sur un film de lithium de l'électrolyte supporté sur le film de polypropylène puis à l'arrachage de ce film de polypropylène et ensuite à la réalisation d'un transfert de l'ensemble lithium électrolyte sur la positive elle-même supportée par un film métallique constituant un collecteur.

Les générateurs obtenus selon ce premier mode de réalisation sont découpés et soumis à des tests de cyclage. On s'aperçoit que pour une température de cyclage de 30°C, un régime de cyclage égal à C/20, et une utilisation de la capacité voisine de 30 % pour le premier cycle, il est impossible d'obtenir plus de trois cycles corrects, puisque l'on observe très rapidement des phénomènes d'apparition de dendrites et des pertes d'adhésion. En outre, lors de l'assemblage des cellules complètes par lamination du film de lithium sur les sous-ensembles bi-couches électrolyte/électrode, on observe des phénomènes de court-circuit qui résultent d'un fluage à chaud du matériau macromoléculaire, ce qui peut s'expliquer par le fait que ledit matériau n'est pas réticulé. Même en prenant toutes les précautions lors de l'assemblage, un taux élevé des cellules est inutilisable en raison de courts-circuits permanents.

Deuxième méthode (Exemple selon l'invention)

a) Réalisation de l'électrode positive : On emploie exactement le même procédé que celui utilisé pour l'élaboration de l'électrode décrite ci-dessus, à l'exception que l'on ajoute à la suspension devant être étalée au gabarit un générateur de radicaux libres constitué par du peroxyde de benzoyle à raison de 0,5 % en poids par rapport au polymère.

On obtient alors une électrode composite analogue à l'électrode de l'exemple 1 à ceci près qu'après un séchage de 5 à 10 minutes à une température comprise entre 80 et 100°C le copolymère est partiellement réticulé en raison de la réaction des groupes allyliques entre eux en présence des radicaux libres résultant du chauffage du peroxyde de benzoyle.

b) On prépare d'autre part une solution destinée à l'obtention de l'électrolyte solide comme décrit dans le premier procédé à l'exception que l'on rajoute à la solution un générateur de radicaux libres, qui, dans ce cas particulier, est le même que celui utilisé pour l'électrode positive. Ledit générateur est utilisé à raison de 0,5 % en poids du polymère. La solution d'électrolyte est épandue alors sur l'électrode positive élaborée précédemment, en utilisant aussi un gabarit.

Le sous-ensemble est séché à 80°C et, d'une manière illustrative, on peut dire que l'on obtient un "vernis" indétachable de la "peinture" de l'électrode positive.

Le sous-ensemble est ensuite associé à une couche métallique de lithium de la même façon que celle expliquée dans l'exemple 1. Les générateurs ainsi obtenus ont été découpés à des formats identiques à ceux du premier exemple et soumis à des tests de cyclage. Ces tests de cyclage ont eu lieu à une température voisine de 30°C et l'on a pu effectuer plus de 320 cycles avec un taux de 50 % d'utilisation de la capacité installée dans la positive.

Troisième méthode (Exemple comparatif)

On a essayé de mettre en oeuvre le même procédé que celui décrit dans la deuxième méthode mais sans utiliser d'agent de réticulation. On s'aperçoit que lors du dépôt de la couche d'électrolyte sur l'électrode positive, il y a une déstructuration de l'électrode positive et qu'il est impossible d'obtenir un sous-ensemble correct en raison de la dissolution partielle de l'électrode en présence du solvant de la deuxième couche.

Quatrième méthode (Exemple comparatif)

Si l'on essaie de mettre en oeuvre un procédé analogue à celui décrit dans la troisième méthode mais en utilisant un solvant de l'électrolyte qui soit un mauvais solvant du matériau de l'électrode, par exemple le méthanol, il y a apparition très rapide de nombreux problèmes au séchage car l'élévation de température entraîne une dissolution de l'électrode positive.

Deuxième série d'exemples

On a essayé plusieurs méthodes pour réaliser un générateur électrochimique dont l'électrolyte est identique à celui de la première série d'exemples, mais a une épaisseur de 60 microns, dont l'électrode positive comprend un dioxyde de molybdène ayant une capacité de 5 Coulombs/cm$^2$ et qui est déposé sur un film métallique de nickel de 5 microns d'épaisseur. Cette électrode positive a une capacité de 66,5 g d'oxyde de molybdène par m$^2$.

Première méthode (Exemple comparatif)

En utilisant une méthode identique à la première méthode de la première série d'exemples, on s'aperçoit qu'il est très difficile d'obtenir un assemblage correct sans apparition de court-circuit et ceci malgré l'épaisseur relativement importante de l'électrolyte qui est de l'ordre de 60 μm (microns). Lorsque cependant, on a pu obtenir un générateur capable de fonctionner, on a observé un taux d'utilisation décroissant rapidement au cours des premiers cycles. Lors d'une utilisation à 60°C, à un régime de C/12, des phénomènes dendritiques sont apparus à la recharge dès le cinquième cycle et cela malgré une épaisseur d'électrolyte de 60 μm.

Deuxième méthode (Exemple selon l'invention)

En utilisant une technique de surépandage dans laquelle l'agent de réticulation est constitué par de l'azobisisobutyronitrile (AZBN) utilisé à raison de 0,5 % en poids du copolymère et en surépandant sur l'électrode positive une épaisseur de 40 μm (microns) d'électrolyte et en réalisant des générateurs secondaires de même dimension que précédemment, on s'aperçoit que l'on peut obtenir des décharges à plus de 70 % d'utilisation, pour une vitesse de décharge de C/12 à 60°C, et ceci sur un nombre élevé de cycles (soit 165). Lors de ces cycles, on n'observe pas d'apparition de dendrite contrairement à l'exemple précédent.

Si l'on n'avait pas utilisé d'agent de réticulation dans la positive, il y aurait eu une désorganisation de celle-ci entraînant un décollement ou des décollements locaux de l'électrode positive de son collecteur en raison de certaines dissolutions locales. Ces problèmes sont résolus lorsque l'on procède en présence de radicaux libres dans la couche d'électrode positive. En l'absence de radicaux libres dans la couche d'électrolyte solide, on ne note pas de problèmes particuliers pour le surépandage, mais par contre certains problèmes peuvent apparaître lorsque l'on veut réaliser des transferts à chaud, par exemple sur un feuillard de lithium, ces problèmes se concrétisant par des effets de court-circuit dus à des effets de fluage.

**Revendications**

1. Procédé de fabrication d'un sous-ensemble électrochimique bicouche électrolyte/électrode comprenant, sous la forme de films minces, une couche d'une électrode composite constituée par le produit d'agglomération, en une masse composite, d'un matériau à conduction ionique lui-même constitué par un sel en solution dans un composé macromoléculaire, d'un matériau électrochimiquement actif d'électrode et d'un matériau conducteur électronique et une couche d'électrolyte solide constituée par un sel en solution dans un matériau macromoléculaire à conduction ionique, ce procédé se caractérisant en ce qu'il consiste :

– à déposer l'une desdites couches sur un support à partir d'une phase fluide renfermant les éléments constitutifs de cette couche,

– à effectuer une réticulation partielle de la couche ainsi déposée, et sur cette couche partiellement réticulée,

– à déposer l'autre couche à partir d'une phase fluide renfermant les éléments constitutifs de ladite autre couche, cette dernière phase fluide étant susceptible de dissoudre ou de gonfler le matériau macromoléculaire présent dans la couche déposée en premier sur le support, ladite réticulation partielle de la couche déposée en premier étant telle que la phase fluide de la couche déposée en second gonfle le matériau macromoléculaire de ladite couche partiellement réticulée.

2. Procédé selon la revendication 1, caractérisé en ce que l'on dépose tout d'abord sur le support une couche de la phase fluide renfermant les éléments constitutifs de l'électrode composite, puis après réticulation partielle de ladite couche d'électrode, on dépose alors sur celle-ci une couche de la phase fluide renfermant l'électrolyte solide, cette phase fluide étant susceptible de dissoudre le matériau macromoléculaire de l'électrode composite en l'absence de réticulation.

3. Procédé selon la revendication 1, caractérisé en ce que l'on dépose tout d'abord sur le support une couche de la phase fluide renfermant l'électrolyte solide, puis après réticulation partielle de ladite couche, on dépose sur cette dernière une couche de la phase fluide renfermant les éléments constitutifs de l'électrode composite, cette dernière phase fluide étant susceptible de dissoudre le matériau macromoléculaire de l'électrolyte solide en l'absence de réticulation.

4. Procédé selon l'une des revendications 1 à 3, caractérisé en ce que le matériau macromoléculaire, qui entre dans la composition de l'électrolyte solide ou/et dans celle de l'électrode composite, est suffisamment fluide aux températures de travail, par exemple matériau macromoléculaire de faible masse moléculaire, pour former avec les autres éléments constitutifs de l'électrolyte solide ou de l'électrode composite un mélange fluide directement utilisable, sans adjonction d'agent solvant, dans les techniques de revêtement de substrat, ledit mélange étant utilisé pour le dépôt de la couche considérée.

5. Procédé selon l'une des revendications 1 à 3, caractérisé en ce que la phase fluide à partir de laquelle on forme la couche d'électrolyte solide ou/et la couche d'électrode consiste en une solution ou, si tous les produits ne sont pas solubles, en une dispersion des éléments constitutifs soit de l'électrolyte solide ou de l'électrode composite dans un solvant du matériau macromoléculaire à conduction ionique présent dans la couche à former et du sel en solution dans ledit matériau macromoléculaire, le solvant présent dans la phase fluide servant à former la couche déposée en second étant aussi un solvant du matériau macromoléculaire présent dans la couche déposée en premier sur le support.

6. Procédé selon l'une des revendications 1 à 5, caractérisé en ce qu'il comporte une étape selon laquelle la couche déposée en second est réticulée partiellement.

7. Procédé selon l'une des revendications 1 à 6, caractérisé en ce que chaque réticulation est réalisée par catalyse photochimique cationique, par irradiation par un flux d'électrons ou autre rayonnement énergétique ou par réaction chimique créant des pontages.

8. Procédé selon l'une des revendications 1 à 6, caractérisé en ce que chaque réticulation est réalisée par élévation de température en présence d'un agent de réticulation activable thermiquement, en particulier un générateur chimique de radicaux libres, ledit générateur étant présent dans la phase fluide utilisée pour former la couche soumise à la réticulation.

9. Procédé selon la revendication 5, caractérisé en ce que la réticulation est réalisée par élévation de température en présence d'un agent de réticulation activable thermiquement, en particulier un générateur chimique de radicaux libres, ledit générateur étant présent dans la phase fluide utilisée pour former la couche soumise à la réticulation, et en ce que ladite élévation de température est utilisée pour réaliser l'évaporation du solvant présent dans ladite phase fluide.

10. Sous-ensemble électrochimique bicouche électrolyte/électrode comprenant, sous la forme de films minces, une couche d'une électrode composite constituée par le produit d'agglomération en une masse composite d'un matériau à conduction ionique, constitué lui-même par un sel en solution dans un composé macromoléculaire, d'un matériau électrochimiquement actif d'électrode et d'un matériau conducteur des électrons, et une couche constituée par une solution d'un sel dans un matériau macromoléculaire, ledit sous-ensemble présentant un continuum chimique et physique entre le matériau macromoléculaire de l'électrode composite et celui de l'électrolyte, à l'interface des couches d'électrode composite et d'électrolyte, et se caractérisant en ce que ledit continuum se présente sous la forme de deux structures polymères interpénétrées, qui sont formées l'une par des chaînes du matériau macromoléculaire de l'électrode composite et l'autre par des chaînes du matériau macromoléculaire de l'électrolyte solide et sont telles que des chaînes de l'une des structures polymères interpénétrées soient co-réticulées à des chaînes de l'autre desdites structures.

11. Sous-ensemble selon la revendication 10, caractérisé en ce que l'une des couches est solidaire d'un matériau support.

12. Sous-ensemble selon la revendication 11, caractérisé en ce que la couche d'électrode composite est solidaire d'un support consistant en un film mince d'un matériau à conduction électronique, notamment aluminium ou nickel.

13. Sous-ensemble selon la revendication 11, caractérisé en ce que l'une des couches est solidaire d'un support consistant en un film d'un matériau polymère facilement arrachable tel que polypropylène ou polyéthylène.

## Patentansprüche

1. Verfahren zur Herstellung eines zweischichtigen elektrochemischen Teilsystems aus Elektrolyt und Elektrode in Form dünner Folien, bestehend aus einer Schicht eines Elektrodenverbundstoffs, die zusammengesetzt ist aus dem Produkt der Sinterung eines Stoffes mit Ionenleitung, der selbst wiederum aus einem in einer makromolekularen Verbindung in Lösung befindlichen Salz besteht, eines elektrochemisch aktiven Elektrodenstoffes und eines Stoffes mit Elektronenleitung zu einer Verbundstoffmasse und einer Schicht aus einem festen Elektrolyten, die zusammengesetzt ist aus einem in einem makromolekularen Stoff mit Ionenleitung in Lösung befindlichen Salz, dadurch **gekennzeichnet,** daß es aus folgenden Stufen besteht:
– Aufbringen einer der Schichten auf einer Träger aus einer die diese Schicht zusammensetzenden Elemente enthaltenden Flüssigphase, Teilvernetzung der so aufgebrachten Schicht und
– Aufbringen der anderen Schicht auf die teilweise vernetzte Schicht aus einer die die andere Schicht zusammensetzenden Elemente enthaltenden Flüssigphase, wobei diese zweite Flüssigphase den in der ersten auf den Träger aufgebrachten Schicht enthaltenden makromolekularen Stoff zu lösen oder zu quellen vermag und
– daß die teilweise Vernetzung der als erste aufgebrachten Schicht so geartet ist, daß die Flüssigphase der als zweite aufgebrachten Schicht den makromolekularen Stoff dieser teilweise vernetzten Schicht zum Quellen bringt.

2. Verfahren nach Anspruch 1, dadurch **gekennzeichnet,** daß man zuerst auf den Träger eine Schicht der Flüssigphase aufbringt, welche die den Elektrodenverbundstoff zusammensetzenden Elemente enthält, und nach der Teilvernetzung der Elektrodenschicht auf diese eine Schicht der den festen Elektrolyten enthaltenden Flüssigphase aufbringt, die den makromolekularen Stoff des Elektrodenverbundstoffs bei fehlender Vernetzung zu lösen vermag.

3. Verfahren nach Anspruch 1, dadurch **gekennzeichnet,** daß man zuerst auf den Träger eine Schicht der Flüssigphase aufbringt, die den festen Elektrolyten enthält und nach der Teilvernetzung dieser Schicht auf diese eine Schicht der die den Elektrodenverbundstoff zusammensetzenden Elemente enthaltenden Flüssigphase aufbringt, wobei diese den makromolekularen Stoff des festen Elektrolyten bei fehlender Vernetzung zu lösen vermag.

4. Verfahren nach einem der Ansprüche 1 bis 3, dadurch **gekennzeichnet,** daß der im festen Elektrolyten und/oder im Elektrodenverbundstoff enthaltene makromolekulare Stoff bei Betriebstemperaturen ausreichend flüssig ist, z.B. einen makromolekularen Stoff von ausreichend geringer Molekularmasse darstellt, um mit den übrigen Komponenten des festen Elektrolyten bzw. des Elektrodenverbundstoffs ohne Zusatz eines Lösungsmittels ein für das Überziehen des Substrats unmittelbar verwendbares flüssiges Gemisch zu bilden, das zur Abscheidung der in Frage kommenden Schicht verwendet wird.

5. Verfahren nach einem der Ansprüche 1 bis 3, dadurch **gekennzeichnet,** daß die Flüssigphase, aus der man die Schicht des festen Elektrolyten und/oder die Elektrodenschicht bildet, aus einer Lösung oder falls die Produkte nicht löslich sind, aus einer Dispersion der Komponente des festen Elektrolyten oder des Elektrodenverbundstoffs in einem Lösungsmittel des makromolekularen Stoffs mit Ionenleitung in der zu bildenden Schicht und des in Lösung befindlichen Salzes im makromolekularen Stoff besteht, wobei das in der Flüssigphase enthaltene Lösungsmittel zur Bildung der zweiten aufgebrachten Schicht dient und gleichzeitig ein Lösungsmittel für den makromolekularen Stoff in der ersten auf den Trager aufgebrachten Schicht darstellt.

6. Verfahren nach einem der Ansprüche 1 bis 5, dadurch **gekennzeichnet,** daß es eine Stufe umfaßt, auf der die zweite abgelegte Schicht teilweise vernetzt wird.

7. Verfahren nach einem der Ansprüche 1 bis 6, dadurch **gekennzeichnet,** daß jede Vernetzung durch kationische photochemische Katalyse, Bestrahlung mit einem Elektronenstrom oder eine andere Art von Energiestrahlung oder durch chemische Umsetzung unter Brückenbildung durchgeführt wird.

8. Verfahren nach einem der Ansprüche 1 bis 6, dadurch **gekennzeichnet,** daß die Vernetzung durch Steigerung der Temperatur in Anwesenheit eines thermisch aktivierbaren Vernetzungsmittels, insbesondere eines chemischen Mittels zur Bildung von freien Radikalen, das in der zur Bildung der zu vernetzenden Schicht verwendeten Flüssigphase enthalten ist, durchgeführt wird.

9. Verfahren nach Anspruch 5, dadurch gekennzeichnet, daß die Vernetzung durch Steigerung der Temperatur in Anwesenheit eines thermisch aktivierbaren Vernetzungsmittels, insbesonderes eines chemischen Mittels zur Bildung von freien Radikalen, das in der zur Bildung der zu vernetzenden Schicht verwendeten Flüssigphase enthalten ist, durchgeführt wird und die Steigerung der Temperatur benützt wird, um das in der Flüssigphase enthaltende Lösungsmittel zu verdampfen.

10. Elektrochemisches zweischichtiges Teilsystem aus Elektrolyt und Elektrode in Form dünner Folien, bestehend aus einer Schicht eines Elektrodenverbundstoffs, die zusammengesetzt ist aus dem Produkt der Sinterung eines Stoffes mit Ionenleitung, der selbst wiederum aus einem in einer makromolekularen Verbindung in Lösung befindlichen Salz besteht, eines elektrochemisch aktiven Elektrodenstoffes und eines Stoffes mit Elektronenleitung, und einer Schicht, die zusammengesetzt ist aus einer Lösung eines Salzes in einem makromolekularen Stoff, wobei dieses Teilsystem an der Grenzfläche zwischen den Schichten des Elektrodenverbundstoffs und des Elektrolyten ein chemisches und physikalisches Kontinuum zwischen dem makromolekularen Stoff des Elektrodenverbundstoffs und dem des Elektrolyten darstellt, dadurch **gekennzeichnet,** daß das Kontinuum in Form zweier sich gegenseitig durchringender Polymerstrukturen vorliegt, von denen die eine durch Ketten des makromolekularen Stoffs des Elektrodenverbundstoffs und die andere von Ketten des makromolekularen Stoffs des festen Elektrolyten gebildet wird und die so geartet sind, daß Ketten der einen der beiden sich gegenseitig durchdringenden Polymerstrukturen mit Ketten der jeweils anderen Struktur zusammen vernetzt sind.

11. Teilsystem nach Anspruch 10, dadurch **gekennzeichnet,** daß eine der Schichten mit einem Trägerstoff eine Einheit bildet.

12. Teilsystem nach Anspruch 11, dadurch **gekennzeichnet,** daß die Schicht des Elektrodenverbundstoffs mit einem Träger eine Einheit bildet, der aus einer dünnen Folie eines Stoffes mit Elektronenleitung, insbesondere Aluminium oder Nickel, besteht.

13. Teilsystem nach Anspruch 11, dadurch **gekennzeichnet,** daß eine der Schichten mit einem Trägerstoff eine Einheit bildet, der aus einer Folie aus einem leicht abziehbaren Polymerstoff wie Polypropylen oder Polyethylen besteht.

## Claims

1. Process for manufacturing an electrolyte/electrode two-layer electrochemical sub-assembly comprising, in the form of thin films, one layer of a composite electrode comprising the agglomeration product in a composite mass of an ionically conductive material itself comprising a salt in solution in a macromolecular compound, an electrochemically active electrode material and an electron conductor material, and a solid electrolyte layer comprising a salt in solution in an ionically conductive macromolecular material, this process being characterised in that it comprises:

– depositing one of the said layers on a support from a fluid phase containing the constituents of this layer;
– partially cross-linking the layer deposited in this manner, and on this partially cross-linked layer;
– depositing the second layer from a fluid phase comprising the constituents of the said second layer, this latter fluid phase being capable of dissolving or inflating the macromolecular material in the first layer deposited on the support; the said partial cross-linking of the first layer deposited being such that the fluid phase of the second layer deposited inflates the macromolecular material of the said partially cross-linked layer.

2. Process according to Claim 1, characterised in that there is firstly deposited on the support a layer of the fluid phase comprising the constituents of the composite electrode, then, after partial cross-linking of the said electrode layer, there is deposited thereon a layer of the fluid phase comprising the solid electrolyte, this fluid phase being capable of dissolving the composite electrode macromolecular material in the absence of cross-linking.

3. Process according to Claim 1, characterised in that there is firstly deposited on the support a layer of the fluid phase comprising the solid electrolyte, then, after partial cross-linking of the said layer, there is deposited thereon a layer of the fluid phase comprising the constituents of the composite electrode, this latter fluid phase being capable of dissolving the solid electrolyte macromolecular material in the absence of cross-linking.

4. Process according to any one of Claims 1 to 3, characterised in that the macromolecular material which forms part of the composition of the solid electrolyte or/and of the composite electrode is sufficiently fluid at the operating temperatures, for example macromolecular material having a low molecular weight, to form with the other constituents of the solid electrolyte or of the composite electrode a fluid mixture which can be used directly without the addition of a solvent agent in the substrate coating techniques, the said mixture being used to deposit the layer in question.

5. Process according to any one of Claims 1 to 3, characterised in that the fluid phase from which the solid electrolyte or/and electrode layer is formed comprises a solution or, if all the products are not soluble, a dispersion of the constituents either of the solid electrolyte or of the composite electrode in a solvent of the ionically conductive macromolecular material present in the layer to be formed and of the salt in solution in the said macromolecular material, the solvent in the fluid phase used to form the second layer deposited also being a solvent of the macromolecular material present in the first layer deposited on the support.

6. Process according to any one of Claims 1 to 5, characterised in that it comprises a stage according to which the second layer deposited is partially cross-linked.

7. Process according to any one of Claims 1 to 6, characterised in that each cross-linking process is performed by cationic photochemical catalysis, by irradiation by an electron flow, or some other form of energy radiation, or by chemical reaction producing couplings.

8. Process according to any one of Claims 1 to 6, characterised in that each cross-linking stage is performed by increasing the temperature in the presence of a cross-linking agent which can be thermally activated, in particular a free radical chemical generator, the said generator being present in the fluid phase used to form the layer subjected to cross-linking.

9. Process according to Claim 5, characterised in that cross-linking is performed by increasing the temperature in the presence of a cross-linking agent which can be thermally activated, in particular a free radical chemical generator, the said generator being present in the fluid phase used to form the layer subjected to cross-linking; and in that the said increase in temperature is used to evaporate the solvent in the said fluid phase.

10. Electrolyte/electrode two-layer electrochemical sub-assembly comprising in the form of thin films a layer of a composite electrode comprising the agglomeration product in a composite mass of an ionically conductive material which itself comprises a salt in solution in a macromolecular compound, an electrochemically active electrode material and an electron conductor material, and a layer comprising a salt in solution in a macromolecular material, the said sub-assembly having a chemical and physical continuum between the composite electrode macromolecular material and that of the electrolyte, on the interface between the composite electrode and electrolyte layers, and is characterised in that the said continuum is in the form of two interpenetrating polymer structures of which one is formed by chains of the composite electrode macromolecular material and of which the other is formed by chains of the solid electrolyte macromolecular material and are such that chains of one of the interpenetrating polymer structures are co-cross-linked with chains of the other of the said structures.

11. Sub-assembly according to Claim 10, characterised in that one of the layers is integral with a support material.

12. Sub-assembly according to Claim 11, characterised in that the composite electrode layer is integral with a support comprising a thin film of an electronically conductive material, in particular aluminium or nickel.

13. Sub-assembly according to Claim 11, characterised in that one of the layers is integral with a support comprising a film of a polymer material which can be easily peeled away such as polypropylene or

polyethylene.